# FASCICULE DE BREVET EUROPEEN

(11) **EP 0 619 003 B1**
(45) Date de publication et mention de la délivrance du brevet: **10.12.1997**
(21) Numéro de dépôt: 93919266.2
(22) Date de dépôt: 03.09.1993
(51) Int. Cl.: F16K 11/074

(54) **CARTOUCHE AVEC PLAQUES EN MATERIAU DUR POUR UN ROBINET MONOCOMMANDE**
EINHEBELMISCHVENTILKARTUSCHE MIT PLATTEN AUS HARTEM MATERIAL
A CARTRIDGE WITH PLATES OF HARD MATERIAL FOR A SINGLE-CONTROL FAUCET

(30) Priorité: 16.09.1992 IT TO920767
(43) Date de publication de la demande: 12.10.1994
(73) Titulaire: GEVIPI A.G., FL-9490 Vaduz (LI)
(72) Inventeur: KNAPP, Francesco, I-27100 Pavia (IT)
(74) Mandataire: Patrito, Pier Franco, Dr. Ing.
(86) Numéro de dépôt international: EP9302393
(87) Numéro de publication internationale: WO9407065

(56) Documents cités:
- EP-A- 0 188 992
- DE-A- 3 339 464
- FR-A- 2 397 579
- FR-A- 2 500 564

## Description

La présente invention a pour objet une cartouche destinée à un robinet monocommande d'un type dans lequel la ou les arrivées ainsi que la ou les sorties pour l'eau sont toutes disposées en correspondance du fond de la cartouche, cette cartouche faisant emploi, comme organes de réglage, de deux plaques en matériau dur, dont l'une est opérativement fixe et l'autre est mobile par rapport à la plaque fixe sous l'action d' organes de manoeuvre prévus pour faire saillie à l'extérieur du robinet, ladite plaque mobile devant demeurer en contact opérationnel avec ladite plaque fixe; cette cartouche comportant une enveloppe étanche et des moyens d'étanchéité interposés entre l'espace intérieur de la cartouche et lesdits organes de manoeuvre de la cartouche.

Une cartouche de ce type est décrite, par exemple, dans le document FR-A-2.500.564. Suivant la technique connue, les cartouches de ce type montrent un inconvénient qui est expliqué ci de suite.

Dans les types de robinets mélangeurs qui reçoivent de l'eau chaude et de l'eau froide et les mélangent, la sortie de l'eau mélangée de la cartouche du robinet mélangeur peut avoir lieu, suivant le type de robinet auquel la cartouche est destinée, soit latéralement à travers des ouvertures pratiquées dans l'enveloppe de la cartouche, soit à travers le fond de la cartouche, où se trouvent aussi les arrivées pour l'eau chaude et pour l'eau froide. Dans les cartouches du premier type indiqué, l'eau mélangée remplit la cartouche, tandis que dans les cartouches du dernier type indiqué l'eau, qui provient des arrivées disposées dans le fond de la cartouche, après avoir été réglée et mélangée, est acheminée vers une sortie qui, elle-même, traverse le fond de la cartouche, sans que l'eau remplisse la cartouche. De ce fait la cartouche est dépourvue de moyens d'étanchéité entre l'espace intérieur de la cartouche et les mécanismes de commande, qui font saillie à l'extérieur pour être accessibles à l'usager, et la cartouche ne demande pas que son enveloppe soit étanche.

Les cartouches du dernier type indiqué peuvent être employées aussi en des types différents de robinets, lesquels reçoivent seulement de l'eau froide et l'acheminent, par fractions réglées, à une sortie et, respectivement, à un passage qui la porte à un réservoir réchauffeur à basse pression, d'où est ainsi expulsée une quantité correspondante d'eau chaude, laquelle atteint la même sortie de l'eau froide, où elle se mélange avec l'eau froide venant du robinet, pour être enfin débitée.

Les cartouches du type considéré, qui utilisent comme organes de réglage des plaques en matériau dur, montrent un inconvénient caractéristique. Si la cartouche est installée dans un robinet mélangeur, et l'eau mélangée sortant de la cartouche rencontre une résistance appréciable au flux, par exemple elle est acheminée à travers un aérateur, la contrepression de débit qui en résulte agit sur la plaque mobile du système de plaques en matériau dur, dans le sens qui tend à l'éloigner de la plaque fixe. Si on arrive à la séparation de la plaque mobile de la plaque fixe, l'eau remplit la cartouche et, du fait que celle-ci n'est pas disposée pour exercer une étanchéité par rapport aux organes de manoeuvre et vers l'extérieur, l'eau s'écoule à l'extérieur du robinet en correspondance de ses organes de manoeuvre. Ce phénomène devient particulièrement grave dans les ainsi-dites cartouches à effet hydraulique, dans lesquelles la pression appliquée entre les plaques mutuellement co-opérant de la cartouche est une fonction de la pression d'alimentation.

Lorsque les cartouches de ce type sont installées dans un robinet co-opérant avec un réservoir d'eau chaude à basse pression, le passage par lequel l'eau froide d'alimentation entre dans la cartouche est soumis à la pression élevée de l'aqueduc, et l'inconvénient indiqué se manifeste avec une gravité maximale.

Par conséquent, dans les cartouches du type considéré on doit habituellement préétablir entre les plaques de la cartouche une pression mutuelle tellement élevée, qu'elle exclut une séparation réciproque causée, suivant le type de robinet dans lequel la cartouche est installée, par la contrepression de débit ou, respectivement, par la pression d'alimentation. Cette pression élevée entre les plaques de la cartouche représente un inconvénient grave, en ce que la manoeuvre du robinet demande une force plus grande, ainsi réduisant le comfort de l'usager, et donne lieu à une plus grande usure des parties, ainsi réduisant la durée utile de la cartouche.

Le but principal de la présente invention est donc de réaliser une cartouche faisant emploi, comme organes de réglage, de plaques en matériau dur, et destinée à un robinet monocommande d'un type dans lequel soit les arrivées, soit les sorties pour l'eau, sont disposées en correspondance du fond de la cartouche, laquelle doit être exempte des inconvénients mentionnés.

Un autre but de l'invention est de réaliser une cartouche ayant ces caractéristiques désirées, sans alourdir d'une façon appréciable le prix de revient de la cartouche.

Un autre but encore de l'invention est de réaliser une cartouche ayant ces caractéristiques désirées, laquelle puisse être fabriquée avec des dimensions et des dispositions correspondantes à celles des cartouches habituelles, de sorte à assurer l'interchangeabilité avec ces cartouches.

Ces buts sont atteints, suivant l'invention, par une cartouche selon le préambule, caractérisée en ce que la cartouche comporte des moyens de communication qui font communiquer l'espace intérieur de la cartouche avec un passage constituant une sortie pour l'eau mélangée ou bien, respectivement, une arrivée pour l'eau à mélanger, de sorte que la pression agissant dans l'espace intérieur de la cartouche contre la surface exposée de la plaque mobile demeure toujours égale à la pression existante dans une conduite de sortie ou d'alimentation, évitant ainsi toute sollicitation tendant à détacher la plaque mobile de la plaque fixe.

Dû à la présence de moyens de communication faisant communiquer l'espace intérieur de la cartouche avec un passage constituant la sortie pour l'eau mélangée ou l'arrivée pour l'eau à mélanger, la pression qui s'établit dans l'espace intérieur de la cartouche est toujours identique à la pression régnant dans ledit passage, soit que cette dernière pression soit très réduite, comme quand la cartouche est installée dans un robinet mélangeur et le débit a lieu sans rencontrer aucune résistance appréciable, soit quand, dans la même installation, une contrepression, même très élevée, s'établit au débit, ou bien encore quand la cartouche est installée dans un robinet co-opérant avec un réchauffeur à basse pression. Par conséquent, une pression égale est appliquée en toutes directions à la plaque mobile du système de plaques en matériau dur, et la pression qui s'établit dans ledit passage de débit ou d'alimentation ne modifie d'une manière nuisible la pression réciproque établie entre la plaque fixe et la plaque mobile de la cartouche. Cette pression réciproque peut être déterminée par des moyens élastiques, par des moyens sensibles à la pression d'arrivée de l'eau, ou bien et de préférence par ces deux types de moyens, mais en tous cas elle résulte substantiellement indépendante de la pression qui s'établit dans ledit passage de débit ou d'alimentation. Le fonctionnement correct de la cartouche est donc indépendant de la contrepression de débit ou, respectivement, de la pression d'alimentation, et en aucun cas ladite pression peut provoquer la séparation de la plaque mobile par rapport à la plaque fixe dans le système de plaques en matériau dur de la cartouche.

Le fait que l'espace intérieur à la cartouche est plein d'eau, éventuellement sous une certaine pression, ne donne lieu à aucun inconvénient dans la cartouche suivant l'invention, du fait que l'enveloppe de la cartouche est étanche, de sorte qu'aucune perte ne peut avoir lieu à travers cette enveloppe, et que des moyens d'étanchéité sont prévus entre l'espace intérieur de la cartouche, plein d'eau, et les mécanismes de manoeuvre, qui communiquent avec l'environnement, de sorte qu'en correspondance de cette région ne peuvent s'établir des pertes non plus.

Une cartouche ayant ces caractéristiques atteint donc le but principal de l'invention. D'autre côté, les dispositions particulières de cette cartouche ne sont pas de nature à en modifier d'une façon appréciable le prix de revient, parce qu'on n'a ajouté ni des parties chères ni des plus graves opérations de montage. Les dispositions particulières de cette cartouche ne comportent des problèmes d'encombrement non plus, de sorte que la cartouche peut être réalisée facilement en des formes et des dimensions standardisées pour être interchangeable avec les cartouches habituelles.

Enfin, les caractéristiques tendant à atteindre les buts de la présente invention n'interfèrent d'aucune façon avec des dispositions éventuelles tendant à appliquer entre la plaque fixe et la plaque mobile de la cartouche une pression de travail qui dépende de la pression d'arrivée de l'eau chaude et de l'eau froide dans un robinet mélangeur, de sorte que ces dernières dispositions peuvent être adoptées, si on le désire, sans préjuger les dispositions caractéristiques suivant la présente invention.

L'invention pourra être mieux comprise, et d'autres caractéristiques, moyens et buts de l'invention ressortiront plus clairement de la lecture de la suivante description d'un mode de réalisation préféré, mais non limitatif, schématiquement représenté dans les dessins annexés, exécutés pour clarté à une échelle plus grande du naturel, et dans lesquels:
Fig. 1 représente une section axiale, faite suivant la ligne diamétrale I-I de la figure 3, d'une cartouche suivant l'invention;
Fig. 2 en montre une autre section, faite suivant la ligne brisée II-II de la figure 3;
Fig. 3 montre la cartouche en une vue axiale du côté du fond;
Fig. 4 montre la cartouche en une section qui correspond à la figure 1, mais en une position opérative différente, la cartouche étant insérée dans le corps d'un robinet, montré en partie seulement; et
Flgs. 5 à 8 montrent l'ensemble constitué par la plaque fixe et par la plaque mobile de la cartouche suivant les figures qui précédent, vu du côté de la plaque mobile, en diverses positions opératives.

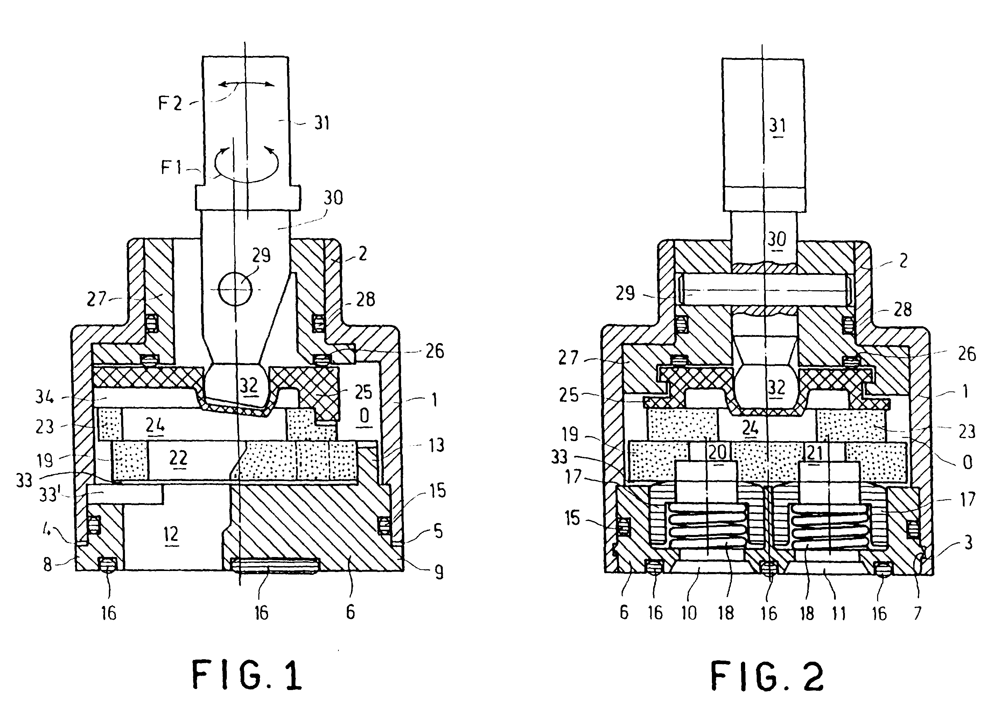

Dans la suivante description on va considérer la cartouche comme disposée avec son axe vertical et avec les moyens de manoeuvre dirigés vers le haut, suivant les figures 1, 2 et 4, mais il faut entendre que, en pratique, la cartouche peut être aussi installée en toute autre position. De plus, la cartouche décrite et représentée est particulièrement disposée pour l'emploi dans un robinet mélangeur, mais sa structure générale correspond aussi à la structure d'une cartouche destinée à un robinet co-opérant avec un réchauffeur à basse pression et, sauf un petit nombre de modifications, qui sont à propos mais ne sont pas indispensables, et dont on fera mention, cette cartouche pourrait aussi être employée dans ladite application.

La cartouche représentée comprend une enveloppe 1-2 comportant une partie principale I destinée à être introduite dans une chambre d'un robinet, et une partie supérieure 2 de diamètre réduit, destinée à être retenue par un couvercle appliqué au corps du robinet et à être traversée par les moyens de manoeuvre. L'enveloppe 1 est ouvert du côté supérieur pour le passage des moyens de manoeuvre, et du côté inférieur pour autoriser le montage des parties internes, et cette ouverture inférieure est destinée à être fermée d'une façon étanche par un fond 6. Sauf ces ouvertures supérieure et inférieure, l'enveloppe 1-2 est étanche, c'est à dire qu'elle ne comporte aucune autre ouverture. Elle détermine un espace intérieur 0 de la cartouche.

Le fond 6 est pourvu de saillies 7 destinées à engager à détente élastique en des creux correspondants 3 de l'enveloppe 1-2, afin de solidariser les deux parties, tandis que des autres saillies 8 et 9 sont destinées à s'introduire en des creux correspondants 4 et 5 de l'enveloppe 1-2 afin d'établir la position réciproque correcte des parties. Le fond 6 est traversé par des ouvertures d'entrée 10 et Il pour l'eau chaude et pour l'eau froide, et par une ouverture 12 de débit pour l'eau mélangée. Le fond 6 comporte vers l'intérieur de la cartouche des saillies 13 pour retenir en position correcte (tout en autorisant un certain déplacement axial) la plaque opérativement fixe en matériau dur 19, et comporte vers l'extérieur des saillies 14 destinées à déterminer la position correcte de la cartouche, lors qu'elle est insérée dans le corps du robinet. Enfin, au fond 6 sont appliquées des garnitures d'étanchéité: une garniture annulaire 15 pour l'étanchéité par rapport à l'enveloppe 1-2, et une garniture complexe 16 entourant les ouvertures 10 à 12 et destinée à faire étanchéité contre le fond de la chambre formée dans un corps de robinet pour recevoir la cartouche.

Dans les ouvertures d'entrée 10 et 11 du fond 6 sont installés des moyens de pression et d'étanchéité (ainsi-dits delex) comportant un manchon 17 en matériau élastomère et un ressort 18, disposés pour établir l'étanchéité entre les ouvertures 10 et 11 et les ouvertures d'entrée 20 et 21 de la plaque fixe 19, et pour appliquer à la plaque fixe 19 une pression dirigé vers la plaque mobile 23 située au-dessus. Ces moyens de pression et d'étanchéité ne font pas partie de l'invention, ils sont indiqués seulement à titre d'exemples et peuvent être remplacés par tout autre moyen de pression et d'étanchéité approprié.

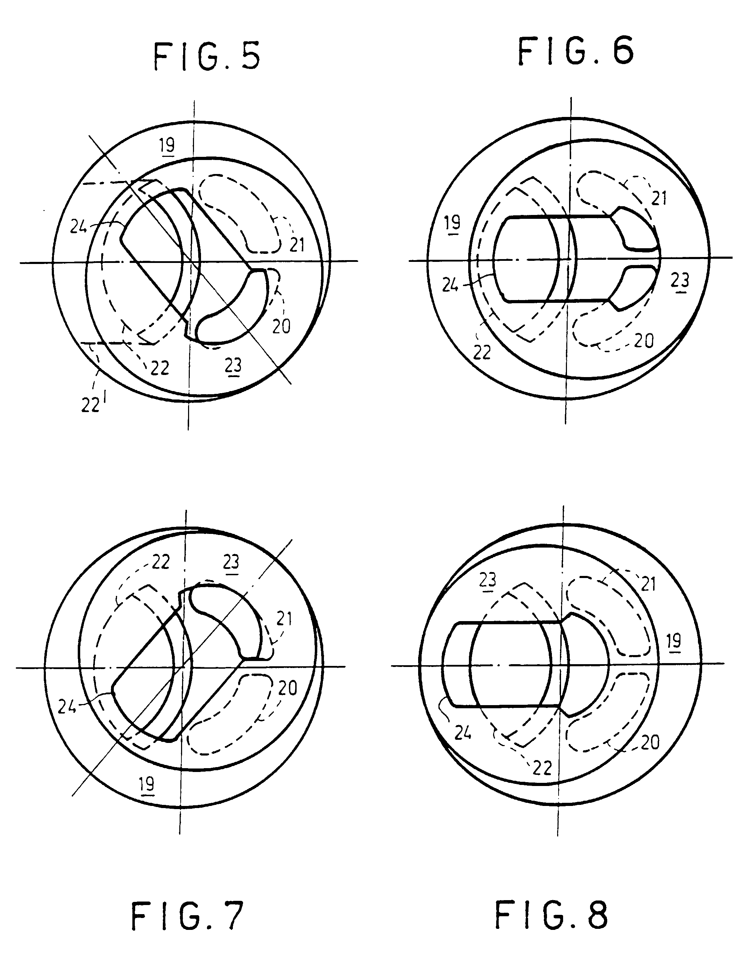

La plaque opérativement fixe 19 comporte des ouvertures d'entrée 20 et 21 qui correspondent aux ouvertures d'entrée 10 et 11 du fond 6, et une ouverture de débit 22 qui correspond à l'ouverture de débit 12 du fond 6. Sur la surface supérieure, qui est polie, de la plaque opérativement fixe 19, est appliquée une plaque mobile 23 dont la surface inférieure est polie et qui comporte une ouverture de passage 24 qui, dans les différentes positions de la plaque mobile 23, peut correspondre de manières différentes aux ouvertures d'entrée 20 et 21 de la plaque opérativement fixe 19, tout en communiquant toujours avec l'ouverture de débit 22. Certaines positions relatives des deux plaques sont représentées à titre d'exemple dans les figures 5 à 8. Dans la position de la figure 5 la plaque mobile 23 établit la communication entre une ouverture de passage 20 et l'ouverture de débit 22, en excluant l'ouverture d'entrée 21. Symétriquement, dans la position de la figure 7 la plaque mobile 23 établit la communication entre l'ouverture de passage 21 et l'ouverture de débit 22, en excluant l'ouverture d'entrée 22. Dans la position de la figure 6 la plaque mobile 23 établit la communication entre les deux ouvertures d'entrée 20 et 21 et l'ouverture de débit 22. Enfin, dans la position de la figure 8, la plaque mobile 23 exclut la communication de l'ouverture de débit 22 par rapport aux deux ouvertures d'entrée 20 et 21. Bien entendu, toutes les positions intermédiaires entre les positions illustrées sont possibles, et l'ensemble de ces positions correspond à la possibilité de régler, indépendemment, la quantité d'eau débitée et le rapport de mélange entre eau chaude et eau froide.

Les déplacements de la plaque mobile 23 sont commandés par un chariot 25 solidaire de la plaque mobile 23 et guidé pour déplacement diamétral par rapport à un organe tournant 27, par rapport auquel l'étanchéité est établie par une garniture annulaire 26. A son tour, l'organe tournant 27 est monté dans la partie supérieure 2 de diamètre réduit de l'enveloppe 1-2 de la cartouche, avec la possibilité de tourner et en faisant étanchéité par rapport à cette partie grâce à une garniture 28. Un pivot diamétral 29 relie l'organe tournant 27 à un levier 30 dont la branche externe 31 fait saillie par rapport à la cartouche et est destinée à être reliée à un organe de manoeuvre, tel qu'un levier extérieur, pour permettre à l'usager de manoeuvrer le robinet. La branche interne 32 du levier 30 est couplé avec le chariot 25. Comme on le comprendra, la rotation du levier 30 autour de l'axe de la cartouche (flèche courbe F1) donne lieu à une rotation correspondante de l'organe tournant 27, du chariot 25 et de la plaque mobile 23 autour de l'axe de la cartouche, provoquant une modification du rapport de mélange, tandis que la rotation du levier 30 autour de son propre pivot 29 (flèche courbe F2) donne lieu à un déplacement diamétral du chariot 25 et de la plaque mobile 23, provquant une modification de la quantité d'eau débitée. Ce fonctionnement d'une cartouche pour robinet mélangeur est en soi bien connu.

Au contraire de ce qui est d'habitude, aucune garniture n'est insérée entre la plaque opérativement fixe 19 et le fond de la cartouche 6, de sorte que l'espace intérieur 0 de la cartouche est en communication permanente avec le passage de débit 12 à travers l'espace 33 séparant la plaque opérativement fixe 19 du fond 6. Toutefois, de préférence, cette communication est encore améliorée par une encoche 33' pratiquée dans le fond 6 en correspondance du passage de débit 12. Par conséquent, la pression qui règne dans l'espace intérieur 0 de la cartouche correspond toujours à la pression qui règne dans le passage de débit 12, et aucune sollicitation de séparation n'est appliquée aux plaques 19 et 23 par quelconque contrepression de débit qui pourrait s'établir. Par conséquent une telle contrepression, même si elle est élevée, ne peut influencer négativement le comportement de la cartouche, et à plus grande raison elle ne peut provoquer une séparation entre les plaques fixe et mobile, et cela indépendemment de la valeur de la pression de contact établie entre ces plaques. La pression de contact entre les plaques peut donc être établie, en une valeur invariable ou bien en une valeur dépendante de la pression d'alimentation, en correspondance de la valeur la plus réduite qui est compatible avec un fonctionnement correct, ainsi assurant le plus grand comfort possible pour l'usager et la plus grande durée utile possible pour la cartouche.

D'autre côté, l'eau qui, venant du passage de débit 12, remplit l'espace intérieur 0 de la cartouche, ne peut pas sortir de cet espace du fait du caractère étanche de l'enveloppe 1-2 et de la présence des garnitures d'étanchéité 15, 26 et 28. Aucune perte ne peut donc avoir lieu.

Comme on le remarquera facilement, les dispositions caractéristiques de l'invention sont simples et ne demandent pas l'emploi de parties chères ni d'opérations difficiles de montage, de sorte qu'elles n'influencent pas d'une façon appréciable le prix de revient de la cartouche. De plus, ces dispositions ne donnent lieu à aucun encombrement appréciable, de sorte qu'elles ne posent aucun obstacle à la production de la cartouche en des formes et dimensions telles à autoriser son intercambiabilité complète par rapport aux cartouches habituelles.

Un avantage ultérieur peut être réalisé par l'adoption des dispositions suivant l'invention. En effet, le chariot 25, qui d'habitude est relié de façon étanche par rapport à la plaque mobile 23, peut, au contraire, être ouvert dans une région périphérique 34 communiquant avec l'ouverture de passage 24 de la plaque mobile 23. De cette manière le flux d'eau mélangé qui, venant de l'ouverture de passage 24 de la plaque mobile 23, s'avance à travers le passage de débit 22 de la plaque opérativement fixe 19, vers le passage de débit 12 du fond 6, est dérivé par un flux ausiliaire qui, partant de l'ouverture de passage 24 de la plaque mobile 23, à travers la région ouverte 34 du chariot 25, atteint l'intérieur de la cartouche et d'ici, à travers l'espace 33 séparant la plaque opérativement fixe 19 par rapport au fond 6, et à travers l'encoche 33' si celle-ci existe, atteint le passage de débit 12 du fond 6. De cette manière, demeurant égales les autres conditions, on réduit la chute de pression dans la cartouche et on peut faire passer au travers de celle-ci une quantité débitée plus grande. Ce phénomène peut être utilisé, en outre, pour réduire les dimensions des ouvertures de débit; par une conformation approprrée des parties, on pourrait même supprimer l'ouverture de débit 22 de la plaque opérativement fixe 19, ou la remplacer par une encoche 22' (figure 5) ouverte vers la périphérie de cette plaque. Le flux ausiliaire peut alors devenir prépondérant ou, à la limite, il peut représenter le flux débité tout entier.

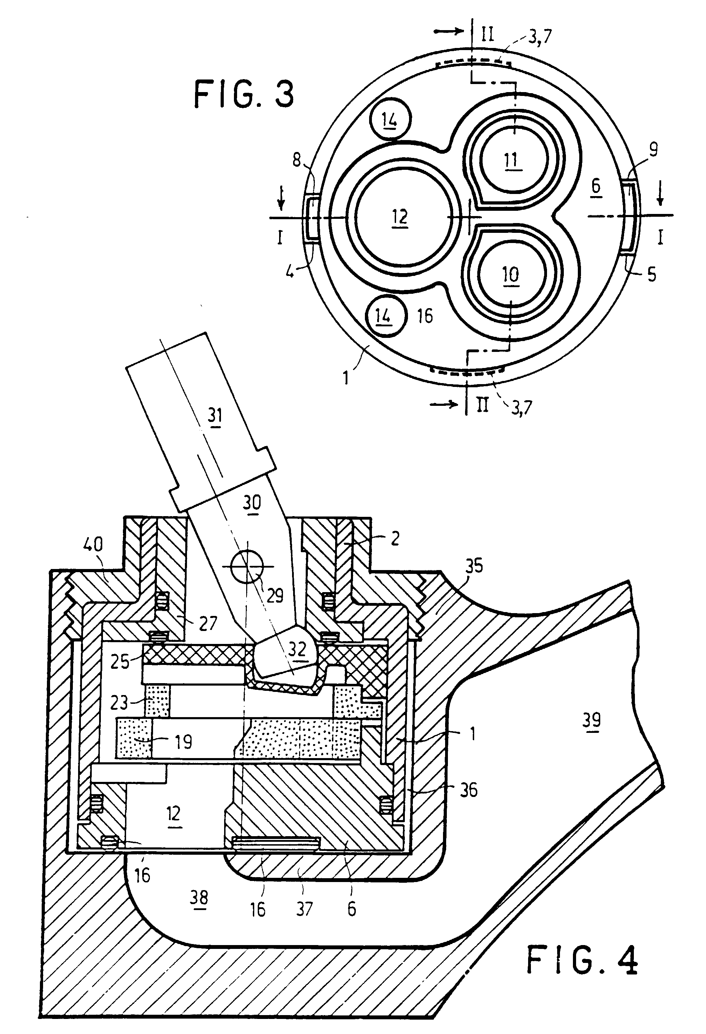

Un exemple d'installation de la cartouche suivant l'invention dans un corps de robinet mélangeur est représenté dans la figure 4. Le corps de robinet 35 comporte une chambre 36 destinée à recevoir la partie 1 de plus grand diamètre de la cartouche, et il est pourvu d'un couvercle 40, par exemple vissé, qui entoure la partie 2 de diamètre plus petit de la cartouche, en serrant la cartouche même contre le fond 37 de la chambre 36. La garniture complexe 16 du fond 6 de la cartouche fait étanchéité contre le fond 37 de la chambre 36, en isolant les ouvertures de passage 10 à 12 de la cartouche. Dans le corps 35 sont pratiqués des passages qui correspondent aux ouvertures 10 à 12 de la cartouche, pour l'arrivée de l'eau chaude et de l'eau froide et pour le débit de l'eau réglée et mélangée; seulement ce dernier passage 38 peut être observé dans la section de la figure 4; il peut communiquer, par exemple, avec un bec de débit, ou bien avec tout raccord de débit. Si la cartouche suivant l'invention est réalisée en forme et dimensions identiques à celles des cartouches habituelles, le corps 35 avec son couvercle 40 peut être d'un type habituel, et il ne demande aucune modification pour recevoir la cartouche suivant l'invention.

Dans le cas où la cartouche suivant l'invention est installée dans un robinet co-opérant avec un réchauffeur à basse pression, l'eau froide d'alimentation arrive à la cartouche à travers le passage 12; à travers l'un des autres passages 10 et 11 elle est acheminée à la sortie, et à travers l'autre passage 11 ou 10 elle est acheminée au réchauffeur à basse pression. De celui-ci se départ, de manière connue, un conduit qui se réunit avec la sortie du robinet dans un raccord de mélange pour donner lieu, en aval de celui-ci, au débit d'eau mélangée. Comme on le comprend, rien ne change en substance dans le comportement de la cartouche et, en particulier, dans les effets de l'application à la cartouche de la présente invention. Toutefois, pour cette application il ne serait pas à propos d'employer pour les passages 10 et 11 des moyens d'étanchéité du type dit delex, et de préférence on va employer des raccords à engagement télescopique, pourvus de garnitures annulaires d'étanchéité, ou bien des garnitures à pression, ou encore tout autre moyen d'étanchéité approprié.

Bien entendu, des différentes modifications peuvent être portées dans la réalisation de la cartouche, par rapport à l'exemple décrit et représenté. Par exemple, les moyens de manoeuvre 25 à 32 peuvent être d'un type, connu ou spécial, différent de l'exemple décrit; la forme et la disposition des ouvertures de passage 20 à 22 et 24 des plaques fixe 19 et mobile 23 peuvent être différentes de celles montrées à titre d'exemple; les moyens pour la solidarisation du fond 6 à l'enveloppe 1-2 de la cartouche peuvent être d'un genre différent de celui qu'on a représenté, incluant les moyens de détente élastique 3, 7 et les moyens d'orientation 4, 5, 8, 9; et les moyens 17-18 destinés à relier les ouvertures d'entrée de la plaque opérativement fixe 19 avec les ouvertures d'entrée du fond 6, ainsi qu'à appliquer à la plaque opérativement fixe 19 une poussée dirigée vers la plaque mobile 23, pourraient être d'un type différent des ainsi-dits delex qu'on a représenté, et cela non seulement lorsque cette mesure est suggérée, comme on l'a dit, par une application particulière de la cartouche. De plus, la garniture complexe 16 qui dessert tous les passages 10 à 12 peut être remplacée par des garnitures séparées et, en particulier, la garniture entourant le passage 12 peut être remplacée par une garniture entourant le fond 6 ou l'enveloppe 1 de la cartouche et destinée à co-opérer avec la paroi de la chambre dont est pourvu le robinet pour recevoir la cartouche, au lieu qu'avec son fond.

## Revendications

1. Cartouche destinée à un robinet monocommande (35) d'un type dans lequel la ou les arrivées ainsi que la ou les sorties pour l'eau sont toutes disposées en correspondance du fond (6) de la cartouche, cette cartouche faisant emploi, comme organes de réglage, de deux plaques en matériau dur (19,23), dont l'une (19) est opérativement fixe et l'autre (23) est mobile par rapport à la plaque fixe (19) sous l'action d'organes de manoeuvre (30-32) prévus pour faire saillie à l'extérieur du robinet (35), ladite plaque mobile (23) devant demeurer en contact opérationnel avec ladite plaque fixe (19); cette cartouche comportant une enveloppe (1-2) étanche et des moyens d'étanchéité (26,28) interposés entre l'espace intérieur (0) de la cartouche et lesdits organes de manoeuvre (30-32) de la cartouche; caractérisée en ce que la cartouche comporte des moyens de communication (33,33') qui font communiquer l'espace intérieur (0) de la cartouche avec un passage (12) constituant une sortie pour l'eau mélangée ou bien, respectivement, une arrivée pour l'eau à mélanger, de sorte que la pression agissant dans 1' espace intérieur (0) de la cartouche contre la surface exposée de la plaque mobile (23) demeure toujours égale à la pression existante dans une conduite de sortie ou d'alimentation, évitant ainsi toute sollicitation tendant à détacher la plaque mobile (23) de la plaque fixe.

2. Cartouche suivant la revendication 1, caractérisée en ce que ladite enveloppe étanche (1-2) de la cartouche est constituée par une jupe substantiellement formée par une partie cylindrique de plus grand diamètre (1), destinée à être introduite dans une chambre (36) d'un robinet (35), et par une partie cylindrique de diamètre plus petit (2), destinée à être entourée par un couvercle (40) dudit corps de robinet (35), ladite enveloppe étant ouverte à l'extrémité de la partie de diamètre plus réduit (2) pour le passage des moyens de manoeuvre (30-32) du robinet, et à l'extrémité de la partie de diamètre plus grand (1), qui est fermée, après le montage des parties internes, par un fond (6) fixé à l'enveloppe (1-2); et étant dépourvue d'autres ouvertures.

3. Cartouche suivant la revendication 1, caractérisée en ce que lesdits moyens d'étanchéité (26,28) sont disposés l'un (26) entre un chariot (25) relié à la plaque mobile (24) de la cartouche et un organe tournant (27) qui supporte et guide pour un déplacement diamétral ledit chariot (25), et l'autre (28) entre ledit organe tournant (27) et la partie de diamètre plus petit (2) de l'enveloppe de la cartouche, dans laquelle ledit organe tournant (27) est monté avec possibilité de rotation.

4. Cartouche suivant la revendication 1, caractérisée en ce que lesdits moyens de communication (33,33') entre l'espace intérieur (0) de la cartouche et un passage (12) constituant la sortie pour l'eau mélangée ou l'arrivée pour l'eau à mélanger sont constitués au moins en partie par l'espace (33) existant entre la plaque opérativement fixe (19) et le fond (6) de la cartouche.

5. Cartouche suivant la revendication 1, caractérisée en ce qu'au moins une encoche (33') est formée dans le fond (6) de la cartouche pour augmenter la section desdits moyens de communication (33,33').

6. Cartouche suivant la revendication 1, caractérisée en ce qu'au moins une ouverture périphérique (22') est pratiquée dans la plaque fixe (19) de la cartouche pour augmenter la section desdits moyens de communication (33,33').

7. Cartouche suivant la revendication 1, caractérisée en ce que la plaque mobile (23) de la cartouche est reliée à un chariot (25) ayant une partie périphérique (34) ouverte vers l'espace intérieur (0) de la cartouche et communiquant avec l'ouverture de passage (24) de la plaque mobile (23).

## Patentansprüche

1. Patrone für einen Einhebelhahn (35), bei dem sowohl der Einlauf oder die Einläufe als auch der Auslauf oder die Ausläufe des Wassers im Bereich der Bodenscheibe (6) der Patrone angeordnet sind, wobei die Stellglieder dieser Patrone zwei Platten (19,23) aus hartem Werkstoff sind, von denen die eine Platte (19) unbeweglich arbeitet und die andere Platte (23) unter der Wirkung von aus dem Hahnkörper (35) herausragenden Betätigungs'elementen (30-32) relativ zur festen Platte (19) beweglich ist, wobei die bewegliche Platte (23) mit der festen Platte (19) in Wirkverbindung bleiben soll und die Patrone ein dichtes Gehäuse (1-2) sowie zwischen dem Innenraum (0) der Patrone und den Betätigungselementen (30-32) der Patrone angeordnete Abdichtungsmittel (26,28) aufweist, dadurch gekennzeichnet, dass die Patrone Verbindungsmittel (33,33') aufweist, die den Innenraum (0) der Patrone mit einem Durchlass (12) in Verbindung setzen, der zum Auslauf des gemischten Wassers bzw. zum Einlauf des zu mischenden Wassers dient, sodass der Druck, der im Innenraum (0) der Patrone auf die ausgesetzte Fläche der beweglichen Platte (23) ausgeübt wird, stets dem in einer Auslauf- oder Einlauf-leitung herrschenden Druck entspricht und dadurch jede Beanspruchung vermieden wird, die danach trachtet, die bewegliche Platte (23) von der festen Platte zu lösen.

2. Patrone nach Anspruch 1, dadurch gekennzeichnet, dass es sich beim dichten Gehäuse (1-2) der Patrone um einen Mantel handelt, der im wesentlichen aus einem zur Einführung in eine Kammer (36) des Hahnkörpers (35) bestimmten, zylinderförmigen Gehäuseteil (1) mit grösserem Durchmesser und aus einem zylinderförmigen Gehäuseteil (2) mit kleinerem Durchmesser besteht, der dazu bestimmt ist, von einem Deckel (40) des Hahnkörpers (35) umfasst zu werden, wobei das Gehäuse sowohl am Ende des Gehäuseteils (2) mit dem kleineren Durchmesser zur Durchführung der Betätigungsmittel (30-32) als auch am Ende des Gehäuseteils (1) mit dem grösseren Durchmesser offen ist, um nach dem Einbau der Innenteile durch die am Gehäuse (1-2) befestigte Bodenscheibe (6) dicht verschlossen zu werden, und es keine weiteren Öffnungen aufweist.

3. Patrone nach Anspruch 1, dadurch gekennzeichnet, dass das erste (26) der Abdichtungsmittel (26,28) zwischen einem mit der beweglichen Platte (23) der Patrone verbundenen Schieber (25) und einem drehbaren Element (27), das den Schieber (25) trägt und zur Führung der diametralen Verschiebung desselben dient, und das andere zwischen dem drehbaren Element (27) und dem Gehäuseteil (2) mit dem kleineren Durchmesser des Patronengehäuses angeordnet sind, in dem das drehbare Element (27) schwenkbar gelagert ist.

4. Patrone nach Anspruch 1, dadurch gekennzeichnet, dass die zwischen dem Innenraum (0) der Patrone und dem zum Auslauf des gemischten Wassers bzw. zum Einlauf des zu mischenden Wassers dienenden Durchlass (12) angeordneten Verbindungsmittel (33,33') wenigstens teilweise aus dem zwischen der unbeweglich arbeitenden Platte (19) und der Bodenscheibe (6) der Patrone gebildeten Raum (33) bestehen.

5. Patrone nach Anspruch 1, dadurch gekennzeichnet, dass in der Bodenscheibe (6) der Patrone wenigstens eine Ausnehmung (33') ausgebildet ist, um den Querschnitt der Verbindungsmittel (33,33') zu vergrössern.

6. Patrone nach Anspruch 1, dadurch gekennzeichnet, dass am Umfang der festen Platte (19) der Patrone wenigstens eine Öffnung (22') ausgebildet ist, um den Querschnitt der Verbindungsmittel (33,33') zu vergrössern.

7. Patrone nach Anspruch 1, dadurch gekennzeichnet, dass die bewegliche Platte (23) der Patrone mit dem Schieber (25) verbunden ist, der am Umfang einen Teil (34) aufweist, der nach dem Innenraum (0) der Patrone hin offen ist und mit der Durchlassöffnung (24) der beweglichen Platte (23) in Verbindung steht.

## Claims

1. A cartridge intended for a single-control faucet (35) of a type having both the water inlet or inlets and the water outlet or outlets positioned at the bottom (6) of the cartridge, this cartridge using, as control members, two valve plates (19,23) made of hard material, one of which (19) is operatively fixed whereas the other (23) is movable with respect to the fixed plate (19) under action of operating members (30-32) intended to project outside the faucet (35), said movable plate (23) being intended to remain in operating contact with said fixed plate (19); the cartridge having a water-tight shell (1-2) and sealing means (26,26) interposed between the inner space (0) of the cartridge and the operating means (30-32) of the cartridge; characterized in that the cartridge comprises communication means (33,33') that link the inner space (0) of the cartridge with a passage (12) constituting the outlet for mixed water or, respectively, the intake for the water to be mixed, whereby the pressure that, in the inner space (0) of the cartridge, acts against the exposed surface of the movable plate (23) always remains equal to the pressure existing in an outlet or inlet passage, this avoiding any action tending to take the movable plate (23) out of the fixed plate.

2. A cartridge according to Claim 1, characterized in that said water-tight sheii (1-2) of the cartridge is formed by a casing substantially comprised of a cylindrical portion (1) of greater diameter, adapted to be introduced into a chamber (36) of a faucet body (35), and a cylindrical portion (2) of smaller diameter, adapted to be surrounded by a lid (40) of said faucet body (35), said shell being open at the end of the portion (2) of smaller diameter for the passage of the faucet operating means (30-32), and at the end of the portion (1) of greater diameter, which is tightly closed, after assembly of the inside parts, by a bottom member (6) attached to the shell (1-2); and having no other openings.

3. A cartridge according to Claim 1, characterized in that said sealing means (26-28) are arranged the one (26) between a slide (25) linked to the movable plate (24) of the cartridge and a rotatable member (27) that supports and guides for diametrical displacement said slide (25), and the other between said rotatable member (27) and the portion (2) of smaller diameter of the cartridge's shell, in which said rotatable member (27) is rotatably mounted.

4. A cartridge according to Claim 1, characterized in that said means of communication (33,33') between the inner space (0) of the cartridge and a passage (12) constituting the outlet for mixed water or the intake for water to be mixed are defined, at least in part, by the space (33) existing between the operatively fixed plate (19) and the bottom member (6) of the cartridge.

5. A cartridge according to Claim 1, characterized in that at least one recess (33') is formed in the bottom member (6) of the cartridge to increase the cross section of said means of communication (33,33').

6. A cartridge according to Claim 1, characterized in that at least one peripheral opening (22') is formed in the fixed plate (19) of the cartridge in order to increase the cross section of said means of communication (33,33').

7. A cartridge according to Claim 1, characterized in that the movable plate (23) of the cartridge is linked to a slide (25) having a peripheral part (34) that is open toward the inner space (0) of the cartridge and communicates with the passage opening (24) of the movable plate (23).
